Europäisches Patentamt

European Patent Office

Office européen des brevets

(19)

(11) Publication number: **0 213 688**
**A1**

# (12) EUROPEAN PATENT APPLICATION

(21) Application number: **86303499.7**

(22) Date of filing: **08.05.86**

(51) Int. Cl.⁴: **G 02 F 1/133**
**G 09 F 9/35**

(30) Priority: **29.08.85 US 770731**

(43) Date of publication of application:
**11.03.87 Bulletin 87/11**

(84) Designated Contracting States:
**AT BE CH DE FR GB IT LI LU NL SE**

(71) Applicant: **REFAC ELECTRONICS CORP.**
**West Hill Road**
**Winsted Connecticut 06098(US)**

(72) Inventor: **McComb, Richard**
**97 Partridge Drive**
**Newington Connecticut(US)**

(74) Representative: **Walters, Frederick James et al,**
**Urquhart-Dykes & Lord 91 Wimpole Street**
**London W1M 8AH(GB)**

(54) Liquid crystal display surface illuminating apparatus.

(57) A liquid crystal display surface illuminating apparatus (10) has a light conductive body (12) with a planar outer surface (18), a concave lower surface (22), end walls (24 and 26) having a recess therein and side walls (22, 25). A light emitter (14, 16) is located within the recess in the end walls. The end walls, side walls and surface (22) are dispersive of light so that incident light entering the body (12) and light from the emitter (14, 16) is reflected from said surfaces and transmitted from the outer surface (18) with the same intensity at all points along the surface (18) to provide a uniform back illumination for the surface of a liquid crystal device (20) when mounted on the apparatus (10).

EP 0 213 688 A1

./...

FIG. I

# LIQUID CRYSTAL DISPLAY SURFACE ILLUMINATING APPARATUS

## APPARATUS

## BACKGROUND OF THE INVENTION

The present invention relates generally to liquid crystal display (LCD) devices and deals more specifically with an LCD backlighting apparatus to illuminate the surface of the LCD device.

A liquid crystal display device is generally preferable to other type display devices because of its low power consumption and characteristics which allow it to be more readily used in large panel display area applications. A display made from a LCD device is often decorative or graphic in appearance and more commonly appears as the standard multi-segment arrangement for forming alphanumeric characters. An LCD device is, due to its small size, low power consumption and reliability, increasingly used as the display device in toys, terminal units, automobiles, aircraft, etc.

One problem, however, generally associated with LCD devices is the difficulty in viewing the display in high ambient light conditions or in the absence of light. Therefore, it is desirable to provide lighting for an LCD device which is more suitable for illuminating the display surface under varying and different lighting conditions.

Liquid crystal displays are generally well known and may be classified as either reflective, transmissive or transflective and a general description of each type follows to provide the reader a better understanding of the LCD surface illuminating apparatus comprising the present invention.

A reflective type LCD consists of two glass sheets separated by a very small distance and sandwiches between them a layer of a liquid crystal material. If the material is a twisted nematic one, then the LCD further includes a top polarizing layer covering the top face of the upper glass sheet and a bottom polarizing layer covering the bottom face of the lower glass sheet. Below the bottom polarizing layer is an opaque reflective layer. The top face of the lower glass sheet has a single continuous electric terminal on its top face which is so thin that light will pass through it. The bottom face of the upper glass sheet has a large number of terminals, each in the form of a metallic pad so thin that light will pass through it. These pads may be arranged in the familiar seven-segment array or in a desired decorative configuration. When an electric field is applied between one of the pads and the metallic coat on the top surface of the bottom glass sheet, the liquid crystal material contained therebetween is changed in molecular alignment in comparison to the molecular alignment when no electric field is applied. Light emitted from the display surface face is only such as may be reflected from the reflective layer, and whether or not light can pass through the display to be reflected is dependent on the molecular alignment of the liquid crystal material taken in conjunction with the polarizing effects of the top and bottom polarizing layers.

A transmissive LCD is similar to a reflective type LCD except that the reflective layer is omitted entirely and some light source is placed below the bottom polarizing layer. Again, whether light passes through the unit and out of its display surface face is dependent on the molecular alignment of the liquid crystal material, in turn controlled by the electrical energization of the thin metallic pads on the bottom surface of the upper glass sheet.

A transflective LCD is similar to the reflective type except that the reflective layer is made so thin that it is not opaque, but is instead transflective. That is, the reflective layer will reflect some incident light from ambient light sources to illuminate the display but other incident light will pass through it. A light source of some type is placed below the transflective layer and may be used to illuminate the display when the reflected light is not sufficient.

One way to provide sufficient illumination to light a transflective or transmissive LCD device surface in low or no ambient light conditions is to use an electroluminescent panel as the light source. One problem associated with electroluminescent panels is that a relatively high magnitude voltage is generally required to power the panel thereby severely limiting its use in hazardous or potentially explosive applications, such as, for example, in displays for gasoline and other fuel pumps.

Another type light source used to illuminate LCD devices uses one or more incandescent bulbs to provide the necessary surface illumination. However, incandescent bulbs generally have a limited life and require relatively large amounts of electrical current and produce hot spots in the display, i.e. the display is not uniformly illuminated at all points along its surface and may be much brighter in some areas than others so that some portions of the display may not appear to be lit or be readily visible to a viewer and may cause erroneous readings in measurement or recording applications wherein the display is used as a digital readout type.

Accordingly, it is desirable to provide illumination for a LCD device which overcomes generally problems encountered using other LCD illuminating techniques and apparatus.

It is a general aim of the present invention therefore to provide apparatus to illuminate a LCD device surface in which light is directed with substantially uniform intensity from a light transmitting surface face using a low cost, long life, low power consuming solid state device as the light source.

It is a further aim of the present invention to provide apparatus for illuminating large area LCD device surfaces.

It is yet a further aim of the present invention to provide a low cost and easily manufactured LCD device surface illuminating apparatus.

These and other features of the invention will become readily apparent from the following description and the drawings forming a part thereof.

## SUMMARY OF THE INVENTION

In accordance with the present invention, a LCD device surface illuminating apparatus is presented. A light conductive body has a substantially planar outer surface, an upwardly arched lower surface, at least one end wall and side walls and the end wall has a recess therein for accommodating a light emitting element, for example, an LED as a light source. The end walls, side walls and lower surface are made dispersive of light by, for example, painting with white paint to make them opaque so that incident light entering the body and light from the light emitting element is reflected from the outer surface with substantially the same light intensity at all points along the surface to provide a substantially uniform back illumination to a LCD device mounted thereon.

The invention further resides in the light body having two end walls and the lower surface including two oppositely disposed sections inclined with respect to the outer surface and each extending in a direction from an associated end wall toward the surface and the midportion of the light body. The two inclined portions intersect an arcuate portion located at the midpoint of the light body to form a smooth, continuous transition along the lower surface.

## BRIEF DESCRIPTION OF THE DRAWINGS

Fig. 1 is an exploded perspective view of a LCD device and LCD surface illuminating apparatus embodying the present invention wherein rays of light are graphically shown being transmitted from the outer surface to illuminate the LCD device surface.

Fig. 2 is a schematic side elevational view of the LCD illuminating apparatus of Fig. 1.

Fig. 3 is a plan view of the apparatus of Fig. 1.

Fig. 4 is a perspective view showing another embodiment of the LCD surface illuminating apparatus of the present invention.

Fig. 5 is a side elevational view of the apparatus of Fig. 4.

Fig. 6 is an exploded perspective view of an LCD and LCD surface illuminating apparatus embodying the present invention arranged as a module for use on a printed circuit board.

## DETAILED DESCRIPTION

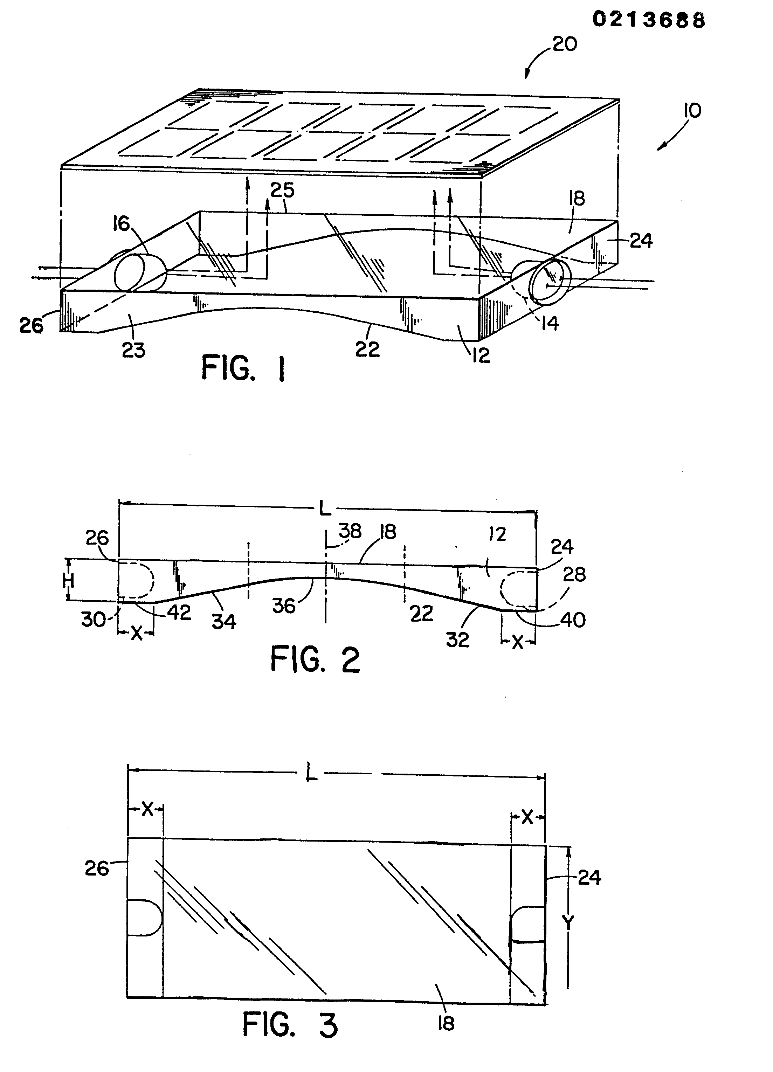

Referring now to the drawings and to Fig. 1 in particular, apparatus for illuminating a liquid crystal display (LCD) device surface is shown therein and is generally designated by the number 10. The apparatus 10 comprises a light conductive body 12 and light emitting diodes (LEDs) 14,16 each of which emit light when a voltage of the proper polarity in the case of DC voltage operated LEDs, and magnitude is applied to its respective leads. The emitted light is incident on the surfaces of the body 12 as explained in further detail hereinbelow, to cause the light transmitted from a light transmitting outer surface face identified by the number 18 on the body 12 to be of substantially uniform intensity at all points on the surface. A LCD device of either the transmissive or transflective type designated generally at 20, is positioned with its lower surface being either very close or in actual physical contact with the light transmitting surface 18 to optically couple the transmitted light to the LCD device with a minimal loss in light intensity. Although the LCD device shown has the familiar seven-segment arragement to display numeric characters, the LCD device may be of the multi-segment arrangement type to display alphanumeric characters or may be designed to display a decorative or graphic representation.

The light conductive body 12 is formed by the substantially planar outer surface face 18, an upwardly arched lower surface designated generally at 22, end walls 24,26 and side walls 23,25 and are best viewed in Figs. 1 through 3. Oblong recesses 28,30 are formed in the end walls 24,26, respectively to receive an associated and similarly shaped LED 14,16 as shown in Fig. 1.

The arched lower surface 22 includes two oppositely disposed sections 32,34 best viewed in Fig. 2, inclined from an associated end wall 24,26, respectively toward the inner or central part of the body 12. The arched surface 22 also includes an arcuate portion designated generally at 36 each end of which intersects an associated one end of each of the inclined sections 32 and 34 to form a smooth, continuous transition along the surface 22. The midpoint of the arcuate portion 36 lies on an axis 38 normal to the surface 18 and is located a substantially equal distance from end walls 24 and 26. The arched surface 22 also includes two substantially flat portions 40,42 having surfaces substantially parallel to the outer surface face 18 and each of which extend from an end wall 24,26, respectively in a direction toward the axis 38 and its associated inclined section 32,34 respectively. Since the intensity of light decreases as the square of the distance from a light source, a greater light intensity is available at the end sections of the body 12 than at the center portion. To achieve a substantially uniform light intensity at all points along the surface face 18 more light is required to be transmitted to the center than the ends and therefore the incline transition of the lower surface 22 is made at a distance X from the end walls 24,26 respectively to redirect or reflect light to the surface 18 to reinforce light directed toward the center portion. The light intensity near the surface 18 end areas is indirectly related to the distance X, that is, as X is made smaller, more light is redirected to the surface 18 from the lower surface 22 to reinforce light from the light source to cause the end areas to appear brighter than other points along the surface. Conversely, as X is made larger, less light is redirected to the surface 18 end areas to reinforce light from the light source and at some distance X, the only light contributing to the surface light intensity is the light from the light source. Consequently, the distance X is selected to cause the light transmitted from the surface face 18 near the surface end areas to be substantially equal to the light transmitted from all other points along the surface face to produce a uniformly illuminated surface.

In order to reflect as much incident light as possible from the surface 18 each of the end walls 24,26, side walls 23,25 and the lower surface 22 are made dispersive of light, for example, by painting the surfaces with white paint to make them opaque so that a maximum amount of incident light is reflected toward and through the outer surface face 18 to provide as much light as possible at a substantially uniform intensity to illuminate an LCD device 20 mounted thereon.

The light conductive body 12 may be made of any transparent material such as glass or a plastic material, but preferably is polycarbonate and is of water clear clarity. These materials absorb very little light energy as the light passes through and are substantially free from a double refraction. Although glass has excellent transparency characteristics, an acrylic or polycarbonate body is advantageous in that it can be readily machined, shaped as desired, and easily manufactured on a large scale.

Representative dimensions for the construction of a relatively large surface area light body 12 are as follows: the outer surface 18 length L is 3.00 inches; the depth Y is 0.50 inches; the height H is 0.20 inches; the distance X is 0.30 inches; the thickness of the body 12 at its midpoint along the axis 38 is 0.05 inches, and the arcuate portion 36 is formed by a turn radius equal to 2.00 inches.

The recesses in the end walls 24,26 are shaped and sized to accommodate the shape and size characteristics of the particular LED used, for example, a T1, T 1 3/4, etc. lens configuration so that the LED may, if desired, be snapped into locking engagement in the recess. Also, if desired, the LED can be permanently mounted in the recess by using glue, epoxy or other clear adhesive having optical characteristics similar or identical to the optical characteristics of the light body material. Additionally, an LED without a lens covering may be permanently mounted in the recess by using a potting material having similar optical characteristics as the light body material.

The operation of the LCD surface illuminating apparatus is as follows. The LEDs 14,16 emit light when a DC voltage of the proper polarity in the case of DC voltage operated LEDS is applied to their respective leads so that each LED functions as a point light source. Since the distance between the outer surface face 18 and the lower surface 22 decreases at points closer to the center, light reflected from the lower surface 22 has a shorter distance to travel to the outer surface from points closer to the center portion of the light body 12 than at the end portions. The lower surface 22 is shaped to minimize multiple bounce reflections and light intensity attenuation so that light transmitted from the surface 18 has substantially the same intensity at all points along the surface.

The apparatus may, if desired, transmit different colored light to enhance a display or achieve a special effect and is accomplished by selecting an appropriate LED designed to emit red, green, white or yellow colored light. The choice of light colors is limited only by the light spectrum emitted from the currently available LED devices.

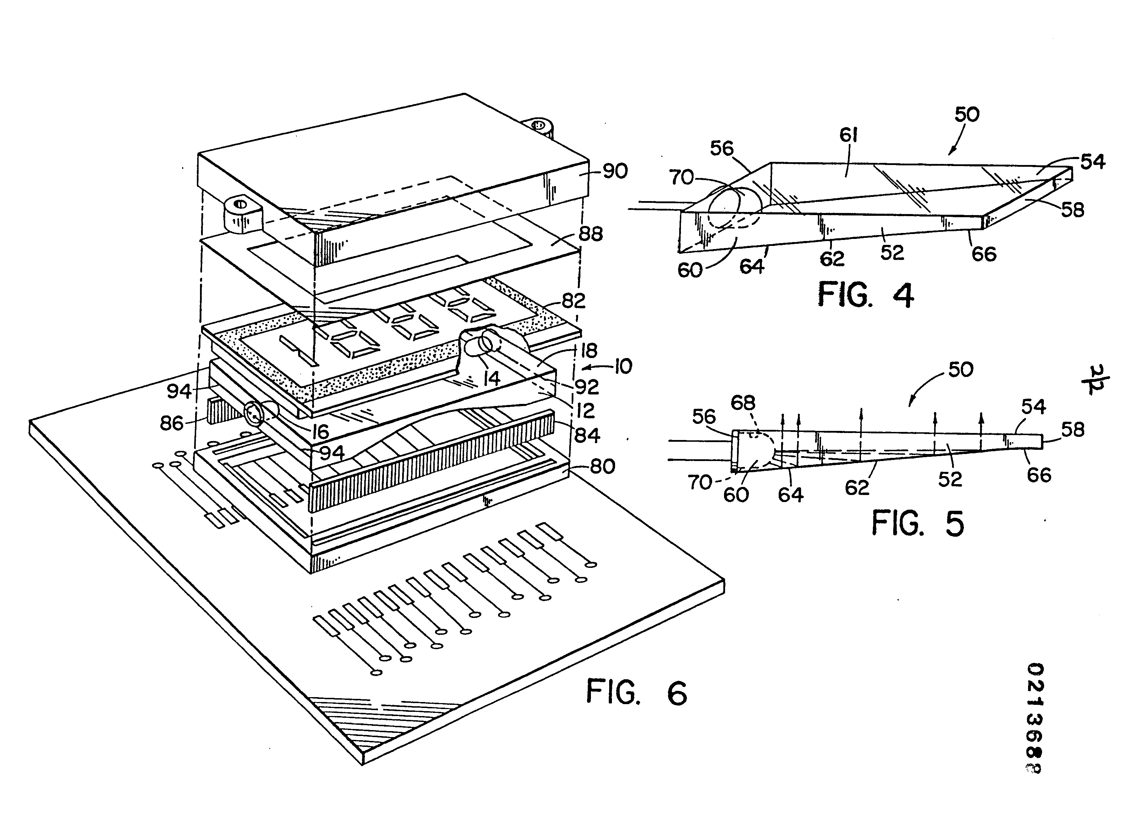

Referring now to Figs. 4 and 5, LCD surface illuminating apparatus designated generally by the number 50 and containing another embodiment of the invention is shown in perspective view in Fig. 4 and in side elevational view in Fig. 5. The apparatus 50 includes a light conductive body 52 having a substantially planar outer surface 54, end walls 56,58, side walls 60,61 and an upwardly arched lower surface 62. The arched surface 62 includes a linear planar surface portion 64 inclined with respect to the outer surface 54 in a direction from the end wall 56 toward the surface 54 and the other end wall 58. The surface 62 changes in a smooth, continuous transition from a linear planar surface portion 64 to an arcuate surface portion 66.

The end wall 56 contains an oblong recess 68 which is sized and shaped to receive a LED 70. The LED 70 may be snapped into locking engagement in the recess or may be permanently inserted in the light body 52 using an adhesive material having substantially similar optical characteristics as the material of the light body. Each of the end walls 56, 58, lower surface 62 and side surfaces 60,61 are made light dispersive for example, by painting them with white paint to make them opaque so that a maximum amount of light either entering the body 52 or emitted by LED 70 is reflected from the outer surface 54.

The distance between the outer surface 54 and the lower surface 62 is smaller nearer the end wall 58 than the end wall 56 and in combination with the shape of the lower surface compensates for the light intensity loss at points further away from the LED 70 light source to cause the light transmitted from the surface 54 to have a substantially uniform light intensity at all locations along the surface.

The embodiment of the LCD surface illuminating apparatus 50 of Figs. 4 and 5 is generally more suitable than the apparatus 10 of Fig. 1 for illuminating smaller LCD device surface areas such as might be found in wrist-watch displays, small panel indicators, etc. due to its smaller size and lower power consumption because only a single light emitting element is used as the light source.

Turning now to Fig. 6, a perspective view of an LCD device and LCD surface illuminating apparatus embodying the present invention is shown wherein the illuminating apparatus is substantially identical to the apparatus 10 described in Fig. 1 and in Figs. 1 and 6 like numbers refer to like parts. The light body 12 is shown sandwiched between a connector frame 80 and a LCD device 82. The connector frame 80 may be of the type mounted directly to a printed circuit board or may be of the type having connection making pins extending therefrom to permit insertion into a receiving socket package which package has corresponding electrical connections to circuit paths on the surface of a printed circuit board. Voltages for powering the LEDs 14,16 and signals for driving the LCD device to produce the desired display are connected to the LEDs and LCD device through zebra strip connectors 84,86 which physically and electrically connect the printed circuit board electrical circuit paths to the associated connecting points on the LCD and the LEDs. As shown in Fig. 6, the arrangement may include a mask 88 and a protective clear bezel 90 to complete the module. It will be understood that the connector frame 80, zebra strips 84,86, LCD 82, mask 88 and bezel 90 are not part of the invention but are included to show one way in which the apparatus 10 may be used to form a LCD device surface illuminating module.

Still referring to Fig. 6, the LED leads 92,94 are substantially parallel to the surface 18 and extend from the LEDs 14,16 to a respective side wall 23,25 of the light body 12 to make contact with an associated zebra strip 84,86 connection point. The leads 92,94 carrying the proper voltages to the LEDs 14,16 respectively may be epoxyied or otherwise adhered to the LED's respective end wall 24,26 surface. The lower surface 22, end walls 24,26 and side walls 23,25 are made dispersive of light, as explained above in the discussion of Fig. 1, so that incident light is reflected toward and transmitted from the outer surface 18 with substantially the same light intensity at all points on the surface to provide a substantially uniform back illumination for the LCD device 82 mounted on the light body 12.

Although the preferred embodiments of the invention as illustrated in Figs. 1-6 show the light source using an LED as the light emitting element, an incandescent lamp may also be used. However, currently available incandescent lamps generally have a broad filament necessitating the use of a relatively large glass envelope to house the filament. Consequently, in order to achieve small packaging size, an LED is preferably used as the light emitting element.

Additionally, the shape of the upwardly arched lower surface, the end and side walls, and the planar outer surface may be modified in accordance with the invention to redirect or reflect light to the surface to intensify the light transmitted from pre-determined points on the outer surface as desired.

Apparatus for illuminating the surface of a liquid crystal display device surface using a low voltage light emitting diode has been described by way of several preferred embodiments. It will be understood that numerous modifications and substitutions may be had without departing from the spirit of the invention. Therefore, the invention has been described by way of illustration rather than the limitation.

0213688

## CLAIMS

1. A liquid crystal display (LCD) surface illuminating apparatus (10), comprising:

a light conductive body (12) having a substantially planar outer surface (18), an upwardly arched lower surface (22), at least one end wall (24,26), said end wall having a recess (28,30) formed therein, and side walls (23,25);

light emitting element means (14,16) adapted to fit within said recess (28,30), and

each of said lower surface (22), end walls (24,26) and side walls (23,25) being dispersive of light so that incident light entering said light body (12) and light from said light emitting means (14) is reflected from said surfaces and transmitted from said outer surface (18) with substantially the same light intensity at all points along the surface (18) to provide a substantially uniform back illumination for the surface of an LCD device (20) mounted thereon.

2. A LCD surface illuminating apparatus (10) as defined in claim 1 further characterized by said upwardly arched surface (22) including at least one section (32,34) inclined with respect to said outer surface (18) and in a direction from said end wall (24,26) toward said outer surface (18).

3. A LCD surface illuminating apparatus (10) as defined in claim 2 characterized in that said lower surface inclined section (32,34) includes an arcuate portion (36) in said lower surface section nearest said outer surface (18).

4. A LCD surface illuminating apparatus (10) as defined in claim 1 further characterized in that said end (24,26) and side walls (23,25) and said upwardly arched lower surface (22) are opaque.

5. A LCD surface illuminating apparatus (10) as defined in claim 1 characterized in that said light emitting element means is an LED (14,16).

6. A LCD surface illuminating apparatus (10) as defined in claim 5 characterized in that said LED (14,16) has a lens material having substantially the same optical characteristics as said light conductive body material.

7. A LCD surface illuminating apparatus as defined in claim 1 characterized in that said light emitting element means (14,16) is an incandescent lamp.

8. A LCD surface illuminating apparatus (10) as defined in claim 1 further characterized in that said upwardly arched lower surface (22) includes two sections (32,34) each of which is inclined with respect to said outer surface (18) in a direction from an associated end wall (24,26) toward said outer surface (18) and an arcuate portion (36), one end of each of said two inclined sections (32,34) intersecting with one of each end of said arcuate portion (36) to form a smooth, continuous transition along said lower surface (22).

9. A LCD surface illuminating apparatus (10) as defined in claim 8 further characterized in that the center of said upwardly arched portion (36) lies on an axis (38) normal to said outward planar surface (18) and extends generally between said two side walls (23,25), said axis (38) being located substantially an equal distance from each end of said outward surface (18).

10. A LCD surface illuminating apparatus (10) as defined in claim 9 further characterized by each of said inclined sections (32,34) including a lower planar surface (40,42) substantially parallel to said outward planar surface (18), each of said lower planar surfaces (40,42) extending generally between an associated end wall (24,26) in a direction toward said normal axis (38) and terminating at the beginning of the inclined portion of its respective inclined section.

11. A liquid crystal display (LCD) surface illuminating apparatus (50), comprising:

a light conductive body (52) having a substantially planar outer surface (54), a generally upwardly arched lower surface (62), at least one end wall (56), said end wall having a recess (68) formed therein, and side walls (60,61);

light emitting element means (70) adapted to fit within said recess (18), and

each of said lower surface (62), end walls (56,58) and side walls (60,61) being dispersive of light so that incident light entering said light body (52) and light from said light emitting means (70) is reflected from said surfaces and directed to and transmitted from said outer surface (54) to provide back illumination for the surface of an LCD device mounted thereon.

12. A LCD surface illuminating apparatus (50) as defined in claim 11 further characterized in that said end (56,58) and side (60,61) walls and said upwardly arched lower surface (62) are opaque.

13. A LCD surface illuminating apparatus (50) as defined in claim 11 characterized in that said light emitting element means (70) is an LED.

14. A LCD surface illuminating apparatus (50) as defined in claim 13 characterized in that said LED (70) has a lens material having substantially the same optical characteristics as said light conductive body material.

15. A LCD surface illuminating apparatus (50) as defined in claim 11 characterized in that said light emitting element means (70) is an incandescent lamp.

0213688

FIG. 1

FIG. 2

FIG. 3

0213688

FIG. 4

FIG. 5

FIG. 6

0213688

## European Patent Office

# EUROPEAN SEARCH REPORT

Application number

## DOCUMENTS CONSIDERED TO BE RELEVANT

EP 86303499.7

| Category | Citation of document with indication, where appropriate, of relevant passages | Relevant to claim | CLASSIFICATION OF THE APPLICATION (Int. Cl.4) |
|---|---|---|---|
| X | WO - A1 - 83/03 013 (TORRESDAL) <br> * Fig. 1; page 1, line 20 - page 2, line 17 * | 1,2,5, 7 | G 02 F 1/133 <br> G 09 F 9/35 |
| Y | | 3,8-10 | |
| A | -- | 4,11, 12,15 | |
| X | US - A - 4 487 481 (SUZAWA) <br> * Column 4, line 38 - column 5, line 55; column 7, line 35 - column 11, line 2 * | 1,2,4, 5,11- 13,15 | |
| Y | -- | 3,8-10 | |
| A | DE - A1 - 3 105 063 (BOSCH) <br> * Page 11, line 6 - page 13, line 10 * | 1,4,11 12 | |
| | ---- | | |

TECHNICAL FIELDS SEARCHED (Int. Cl.4)

G 02 F 1/00
G 09 F 9/00

The present search report has been drawn up for all claims

| Place of search | Date of completion of the search | Examiner |
|---|---|---|
| VIENNA | 17-11-1986 | GRONAU |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503. 03.82